# EUROPEAN PATENT APPLICATION

(11) **EP 1 956 591 A2**
(43) Date of publication of application: **13.08.2008**
(21) Application number: 08151266.7
(22) Date of filing: 11.02.2008
(51) Int. Cl.: G11B 5/54, G11B 21/22

(54) **Actuator latch system for hard disk drive**

(30) Priority: 12.02.2007 KR 20070014561
(71) Applicant: Samsung Electronics Co., Ltd., Suwon-si, Gyeonggi-Do (KR)
(72) Inventor: Choi, Byoung-gyou 103-505, Hanyang Apt., Gyeonggi-do (KR); Kim, Dong-wook 202-203, Family 2-danji Apt., Seoul (KR)
(74) Representative: Grünecker, Kinkeldey, Stockmair & Schwanhäusser Anwaltssozietät

(57) **Abstract**

Provided is an actuator latch system for an HDD for locking an actuator (130), which includes a swing arm (132) rotatably installed on a base member (110), a VCM coil coupled to an end portion of the swing arm, a lower yoke (138) an upper yoke (139) disposed below and above the VCM coil, and a magnet (137) attached onto at least one of the lower yoke and the upper yoke, in a head parking position. The actuator latch system includes: a notch (210) formed on an end portion of the swing arm; a latch lever (220) rotatably coupled to a pivot shaft (222) that is fixed on the base member (110), and including a hook (223) which can be engaged by the notch formed on an end of the latch lever and a counterbalance (224) formed on the other end of the latch lever; and a first retract member (226) installed on the counterbalance of the latch lever to apply a torque to the latch lever in a direction using the magnetic force applied between the first retract member and the magnet. The first retract member is located at a height where a vertical component force of the magnetic force applied to the first retract member from the magnet is 0 or is minimized, and a first gap (91) and a second gap (92) are respectively formed below and above the latch lever.

## Description

### CROSS-REFERENCE TO RELATED PATENT APPLICATIONS

This application claims the benefit of Korean Patent Application No. 10-2007-0014561, filed on February 12, 2007, in the Korean Intellectual Property Office, the disclosure of which is incorporated herein in its entirety by reference.

### BACKGROUND OF THE INVENTION

### 1. Field of the Invention

The present invention relates to a hard disk drive, and more particularly, to an actuator latch system of a hard disk drive, which prevents an actuator from rotating due to an external shock when a disk is not rotating, by locking the actuator at a predetermined position.

### 2. Description of the Related Art

Hard disk drives (HDD), which are a kind of information storage media used in computers, reproduce data from a disk or record data onto the disk using a read/write head. In HDDs, the head is moved to a desired position by an actuator while lifting the head a predetermined height from a recording surface of the rotating disk to perform the reproducing/recording.

In addition, when the HDD does not operate, that is, when the rotation of the disk is stopped, the read/write head is parked away from the recording surface of the disk so as not to collide with the recording surface of the disk. The parking system of the magnetic head can be classified as a contact start stop (CSS) type or a ramp loading type. The CSS type parking is a parking method, in which a parking zone on which data is not recorded is formed, wherein the parking zone is disposed on an inner circumference of the disk, and the head is contacted with the parking zone to park the head. In addition, according to the ramp loading type parking, a ramp is installed outside the disk, and the head is parked on the ramp.

However, in a state where the head is parked on the parking zone or the ramp of the disk, the actuator can be rotated by an external shock or vibration applied to the HDD, and then, the head can move to the recording surface of the disk out of the parking zone or the ramp. In this case, the head contacts the recording surface of the disk, and thus, the head or the recording surface of the disk may be damaged. Therefore, when the rotation of the disk is stopped and the head is parked on the parking zone or the ramp, the actuator needs to be locked on a predetermined position, and to do this, the HDD can include various kinds of actuator latch systems.

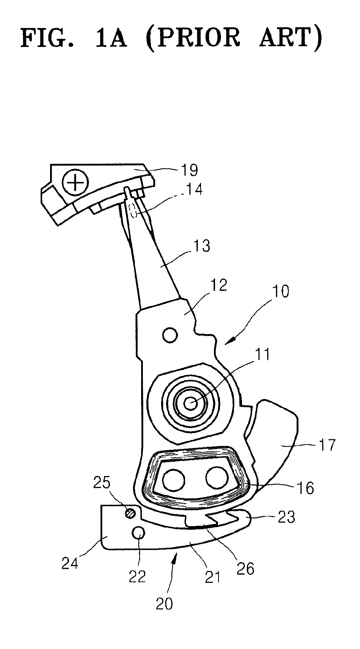

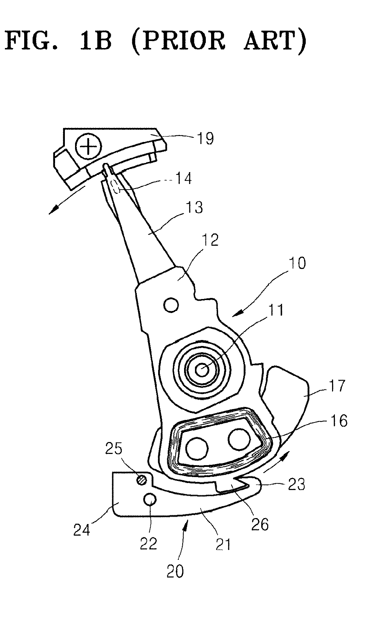

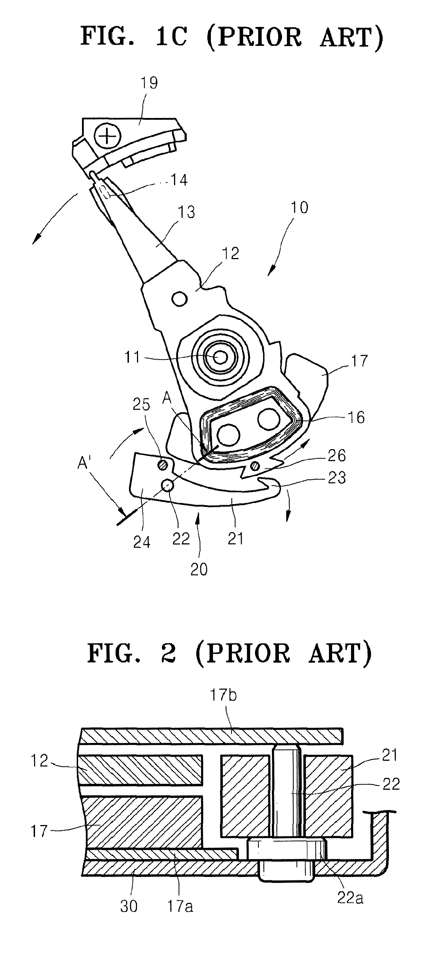

In FIGS. 1A, 1B, and 1C, an inertial latch is shown as an example of an actuator latch system in an HDD according to the conventional art.

Referring to FIG. 1A, the actuator 10 is installed in the HDD in order to move the read/write head for reproducing or recording data onto a desired position on the disk. The actuator 10 includes a swing arm 12 that is rotatably coupled to an actuator pivot 11, and a suspension assembly 13 installed on an end portion of the swing arm 12 to support a slider 14, on which the head is mounted, so that the slider 14 can be elastically biased toward a surface of the disk, and a voice coil motor (VCM) for rotating the swing arm 12. The VCM includes a VCM coil 16 coupled to a rear end portion of the swing arm 12, and a magnet 17 facing the VCM coil 16.

In addition, the HDD includes an inertial latch apparatus 20 for locking the actuator 10 when the head is parked on the ramp 15. The inertial latch apparatus 20 includes a latch lever 21 that can rotate based on a pivot shaft 22, and a notch 26 disposed on the rear end portion of the swing arm 12 of the actuator 10. In addition, a hook 23 that can be engaged by the notch 26 is disposed on a front edge portion of the latch lever 21, and a counterbalance 24 is formed on the rear end portion of the latch lever 21. In addition, a retract ball 25 formed of a magnetic material so that a magnetic force can be applied between the retract ball 25 and the magnet 17 is installed on the counterbalance 24. A torque for rotating the latch lever 21 in a clockwise direction is applied to the latch lever 21 by the magnetic force between the retract ball 25 and the magnet 17.

Hereinafter, operations of the conventional inertial latch apparatus 20 will be described as follows.

Referring to FIG. 1B, when a rotational shock in a clockwise direction is applied to the HDD in a state where the head mounted on the slider 14 is parked on the ramp 19, the swing arm 12 and the latch lever 21 rotate in counter-clockwise directions by inertia, and accordingly, the notch 26 of the swing arm 12 is engaged by the hook 23 of the latch lever 21 and the swing arm 12 cannot rotate further. On the other hand, when a rotational shock in a counter-clockwise direction is applied to the HDD, the swing arm 12 and the latch lever 21 rotate in clockwise directions by inertia. At this time, the rear end portion of the swing arm 12 and the counterbalance 24 of the latch lever 21 collide with each other due to the rotation in the clockwise direction. Due to the above collision, the swing arm 12 and the latch lever 21 rebound to rotate in the counter-clockwise direction. Therefore, as described above, the notch 26 of the swing arm 12 is engaged by the hook 23 of the latch lever 21, and the swing arm 12 cannot rotate further.

Next, referring to FIG. 1C, in order to operate the HDD, the head must be moved to a recording surface of the disk from the ramp 19. To do this, the swing arm 12 is rotated in the counter-clockwise direction by the VCM. At the same time, the latch lever 21 is rotated in the clockwise direction by the magnetic force applied between the magnet 17 and the retract ball 25, and is opened. Therefore, the notch 26 of the swing arm 12 does not interfere with the hook 23 of the latch lever 21, and thus, the swing arm 12 can freely rotate in the counter-clockwise direction.

However, in the conventional inertial latch apparatus 20, the latch lever 21 must open while rotating in the clockwise direction so as not to interfere with the rotation of the swing arm 12 in the counter-clockwise direction when the HDD operates. Here, if the rotation speed of the latch lever 21 in the clockwise direction becomes slow or inconsistent, the notch 26 of the swing arm 12 can be engaged by the hook 23 of the latch lever 21. In this case, the HDD cannot operate. This problem will be described in more detail with reference to FIG. 2.

FIG. 2 is a cross-sectional view of the latch lever 21 taken along line A-A' of FIG. 1C. Referring to FIG. 2, the pivot shaft 22 is fixedly installed on a base member 30 of the HDD, the magnet 17 is attached on a lower yoke 17a, and an upper yoke 17b extends to an upper portion of the pivot shaft 22. In addition, a bottom surface of the latch lever 21 contacts an upper surface of a flange 22a of the pivot shaft 22. Therefore, friction is created between the flange 22a of the pivot shaft 22 and the latch lever 21 when the latch lever 21 rotates. However, if contacting surfaces between the latch lever 21 and the flange 22a are rough, or if burr or impurities exist on the contacting surfaces, a frictional force between the latch lever 21 and the flange 22a of the pivot shaft 22 increases. In this case, the rotational speed of the latch lever 21 in the clockwise direction is decreased or becomes inconsistent, and accordingly, the above problem may occur.

If the HDD installed in a mobile electronic device is used in a state of being turned upside-down, the latch lever 21 and the upper yoke 17b contact each other, and accordingly, the above problem occurs due to the friction between the latch lever 21 and the upper yoke 17b.

According to the conventional art, in order to prevent the above problem, protrusions are formed on the upper surface and the bottom surface of the latch lever to reduce the contact area and the frictional force. However, this method is not enough to prevent the above problem.

### SUMMARY OF THE INVENTION

The present invention provides an actuator latch system for a hard disk drive (HDD) capable of improving an operational accuracy of a latch lever by lifting the latch lever using a magnetic levitation mechanism so that the latch lever does not contact a flange of a pivot shaft and an upper yoke.

According to an aspect of the present invention, there is provided an actuator latch system for a hard disk drive (HDD) for locking an actuator, which includes a swing arm rotatably installed on a base member, a voice coil motor (VCM) coil coupled to an end portion of the swing arm, a lower yoke and an upper yoke disposed below and above the VCM coil, and a magnet attached onto at least one of the lower yoke and the upper yoke, in a head parking position, the actuator latch system including: a notch formed on an end portion of the swing arm; a latch lever rotatably coupled to a pivot shaft that is fixed on the base member, and including a hook which can be engaged by the notch formed to an end of the latch lever and a counterbalance formed to the other end of the latch lever; and a first retract member installed on the counterbalance of the latch lever to apply a torque to the latch lever in a direction using the magnetic force between the first retract member and the magnet; wherein the first retract member is formed at a height where a vertical component force of the magnetic force applied to the first retract member from the magnet is 0 or is minimized, and a first gap and a second gap are respectively formed below and above the latch lever.

The first gap may be formed between a bottom surface of the latch lever and an upper surface of a flange formed on the pivot shaft, and the second gap may be formed between an upper surface of the latch lever and a bottom surface of the upper yoke.

Each of the first gap and the second gap may be greater than a potential height change of the first retract member caused by the weights of the latch lever and the first retract member. Each of the first gap and the second gap may be 0.05mm ~ 0.2mm greater than the potential height change of the first retract member.

The first retract member may be installed in the counterbalance using an insertion molding method.

A stopper may be formed on the latch lever so as to contact the notch in order to restrict the rotation of the swing arm when the swing arm rotates toward the head parking position. The stopper may protrude from a portion of the latch lever, which is adjacent to the pivot shaft.

A weight may be installed on the counterbalance of the latch lever in order to control an inertial force of the latch lever.

A second retract member may be disposed on an end portion of the swing arm so as to apply a torque to the swing arm in a direction using the magnetic force between the second retract member and the magnet. The torque applied to the swing arm by the second retract member may be greater than the torque applied to the latch lever by the first retract member.

### BRIEF DESCRIPTION OF THE DRAWINGS

The above and other features and advantages of the present invention will become more apparent by describing in detail exemplary embodiments thereof with reference to the attached drawings in which:
FIGS. 1A, 1B, and 1C are views of an inertial latch in a hard disk drive (HDD) according to the conventional art;
FIG. 2 is a cross-sectional view of a latch lever in the conventional inertial latch taken along line A-A' of FIG. 1C;
FIG. 3 is a plan view of an HDD including an actuator latch system according to an embodiment of the present invention;
FIG. 4 is an expanded perspective view of a part in the actuator latch system of FIG. 3;
FIG. 5 is a cross-sectional view of the actuator latch system taken along line B-B' of FIG. 3;
FIG. 6 is a graph illustrating component forces in a vertical direction of a magnetic force that is applied to a first retract member according to a height of the first retract member; and
FIGS. 7A and 7B are views illustrating a locking operation and a lock-releasing operation of the actuator latch system according to the embodiment of the present invention.

### DETAILED DESCRIPTION OF THE INVENTION

Hereinafter, an actuator latch system for an HDD according to embodiments of the present invention will be described in detail. In the drawings, like reference numerals denote like elements.

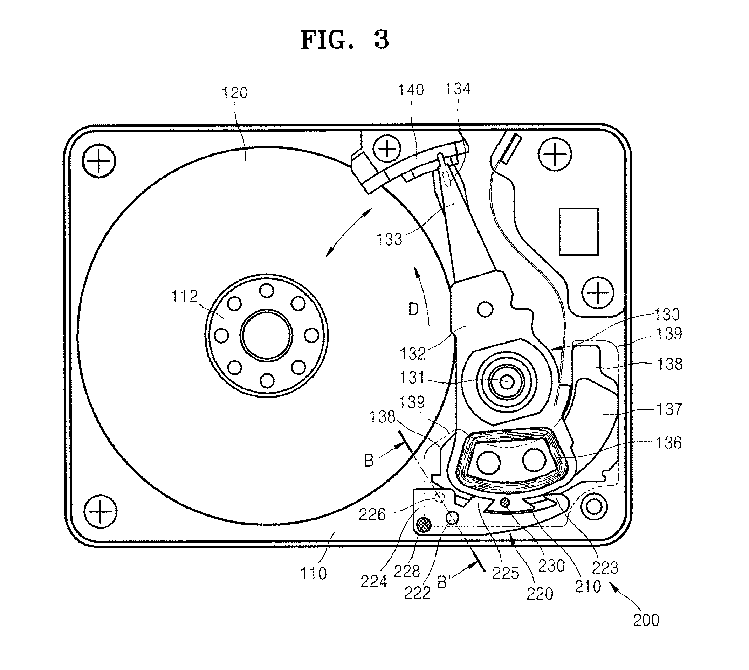

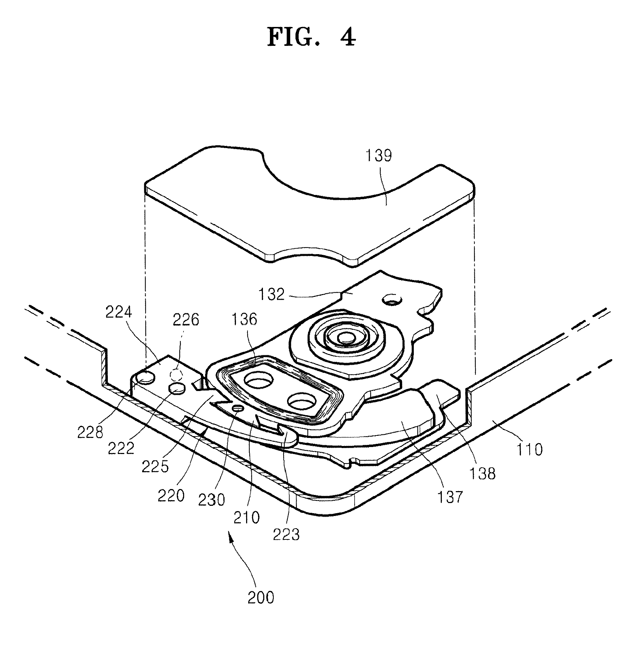

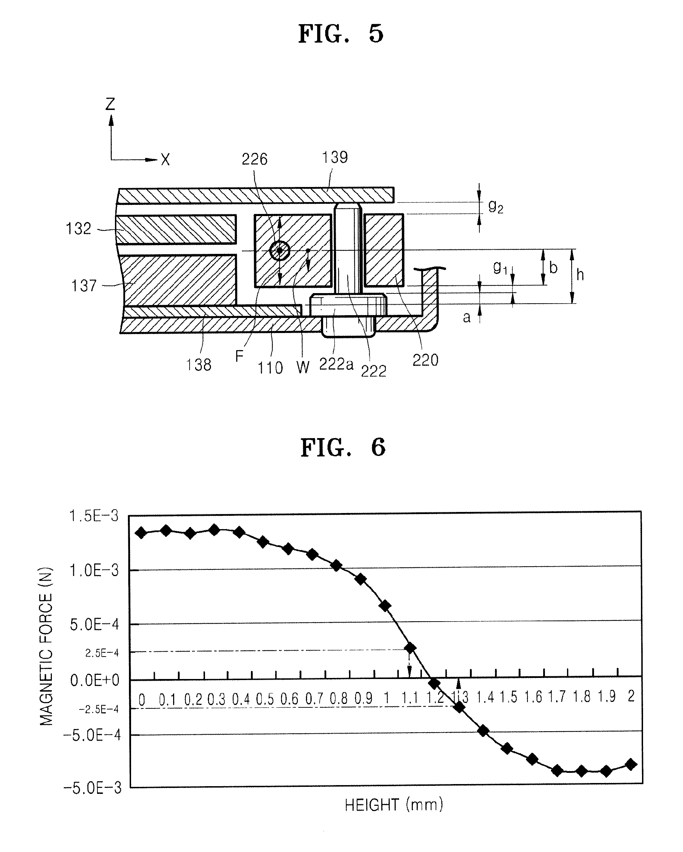

FIG. 3 is a plan view of an HDD including an actuator latch system according to an embodiment of the present invention, FIG. 4 is an expanded perspective view of a part of the actuator latch system of FIG. 3, and FIG. 5 is a cross-sectional view of the actuator latch system taken along line B-B' of FIG. 3.

Referring to FIGS. 3 and 4, the HDD includes a disk 120 mounted on a spindle motor 112, and an actuator 130 that moves a read/write head for recording/reproducing data onto a predetermined position on the disk 120. The actuator 130 includes a swing arm 132 that is rotatably coupled to an actuator pivot 131 installed on a base member 110 of the HDD, a suspension assembly 133 installed on a front end portion of the swing arm 132 to support a slider 134 on which the head is mounted, so that the slider 134 can be elastically biased toward a surface of the disk 120, and a voice coil motor (VCM) for rotating the swing arm 132.

The VCM includes a VCM coil 136 disposed on a rear end portion of the swing arm 132, and a magnet 137 disposed to face the VCM coil 136. A lower yoke 138 and an upper yoke 139 are disposed to face each other below and above the VCM coil 136, and the magnet 137 is attached onto an upper surface of the lower yoke 138 to be supported thereby. Otherwise, the magnet 137 can be attached onto a bottom surface of the upper yoke 139, or can be attached onto each of the upper surface of the lower yoke 137 and the bottom surface of the upper yoke 139. In order to clarify the structure of the VCM, the upper yoke 139 is denoted by a double-dot dashed line in FIG. 3, and in FIG. 4 the upper yoke 139 is shown to be separated upward from the VCM coil 136.

The VCM having the above structure is controlled by a servo control system, and rotates the swing arm 132 in a direction according to Fleming's left-hand rule by an interaction between the electric current input into the VCM coil 136 and a magnetic field formed by the magnet 137. For example, in the HDD having the ramp-loading type head parking system, when the HDD is turned on and the disk 120 starts to rotate in a direction denoted by the arrow D, the VCM rotates the swing arm 132 in the counter-clockwise direction to move the head from the ramp 140 installed adjacent to the disk 120 to a recording surface of the disk 120. On the other hand, when the HDD is turned off and the disk 120 stops rotating, the VCM rotates the swing arm 132 in the clockwise direction to retract the head from the disk 120. The head retracting from the recording surface of the disk 120 is parked on the ramp 140 that is disposed adjacent to the disk 120.

Meanwhile, in the HDD having the CSS type head parking system, when the HDD is turned on and the disk 120 starts to rotate, the VCM rotates the swing arm 132 in the clockwise direction to move the head from a parking zone that is formed on an inner circumference of the disk 120 to a data zone that is formed on an outer circumference of the disk 120. On the other hand, when the HDD is turned off and the disk 120 stops rotating, the VCM rotates the swing arm 132 in the counter-clockwise direction to move the head from the data zone to the parking zone and park the magnetic head in the parking zone.

The HDD having the above actuator 130 includes an actuator latch system 200 according to the embodiment of the present invention. The actuator latch system 200 locks the actuator 130 when the HDD is not operating, so that the read/write head mounted on the actuator 130 maintains the parking state on the parking zone, for example, on the ramp 140. That is, the actuator latch system 200 prevents the actuator 130 from rotating due to an external shock or vibration and prevents the head from moving onto the recording surface of the disk 120 from the ramp 140 in a state where the disk 120 is not rotating. If the head moves onto the recording surface of the disk 120 when the disk 120 is not rotating, the head directly contacts the recording surface of the disk 120, and thus, the recording surface of the disk 120 and/or the head may be damaged.

The actuator latch system 200 of the current embodiment of the present invention includes a notch 210 formed on a rear end portion of the swing arm 132, and a latch lever 220 that is rotatably installed on the base member 110.

As described above, the VCM coil 136 is coupled to the rear end portion of the swing arm 132, to do this, the rear end portion of the swing arm 132 is generally formed of a plastic injection mold. In addition, the notch 210 can be formed to protrude from the rear end portion of the swing arm 132 using a plastic injection molding method.

The latch lever 220 is rotatably coupled to a pivot shaft 222 that is fixedly installed on the base member 110. The latch lever 220 includes a hook 223 that is formed on the latch lever 220 to one side of the pivot shaft 222 to engage with the notch 210 when the actuator is locked, and a counterbalance 224 disposed on the latch lever 220 to the other side of the pivot shaft 222. When a rotational shock in a first direction, for example, a clockwise direction, or a second direction, for example, a counter-clockwise direction is applied to the HDD, the latch lever 220 rotates in a counter-clockwise direction or in a clockwise direction by inertia. The notch 210 of the swing arm 132 is engaged by the hook 223 of the latch lever 220 by inertia, and thus, the rotation of the swing arm 132 is restricted. Operations of the actuator latch system 200 will be described in more detail later.

A weight 228 can be installed on the counterbalance 224, and the inertia of the latch lever 220 can be controlled appropriately by controlling the weight 228.

A stopper 225 can protrude from an intermediate portion of the latch lever 220, that is, a portion adjacent to the pivot shaft 222. When the swing arm 132 rotates in the clockwise direction in order to park the head, the stopper 225 contacts the notch 210 of the swing arm 132 to restrict the rotation of the swing arm 132 in the clockwise direction. Accordingly, the swing arm 132 can stop at a precise parking position.

The actuator latch system 200 of the current embodiment includes a first retract member 226 that is installed on the counterbalance 224 of the latch lever 220. The first retract member 226 may be formed of a magnetic material, for example, a steel material that is a ferromagnetic material, so that the magnetic force of the magnet 137 can be applied to the first retract member 226, and can be formed as a ball or a pin. The first retract member 226 applies a torque in the clockwise direction to the latch lever 220. In more detail, since the magnetic force of the magnet 137 is applied to the first retract member 226, the torque for rotating in the clockwise direction is applied always to the latch lever 220 by component forces of the magnetic force in the horizontal direction.

In addition, the first retract member 226 lifts the latch lever 220 to a predetermined height using a magnetic levitation mechanism. This will be described in more detail with reference to FIGS. 5 and 6.

FIG. 5 is a cross-sectional view of the actuator latch system taken along line B-B' of FIG. 3.

Referring to FIG. 5, the pivot shaft 222 of the latch lever 220 is fixedly installed on the base member 110 of the HDD, the magnet 137 is attached to an upper surface of the lower yoke 138, and the upper yoke 139 extends to an upper portion of the pivot shaft 222. Meanwhile, as described above, the magnet 137 can be attached to a bottom surface of the upper yoke 139, and can be attached to the upper surface of the lower yoke 138 and the bottom surface of the upper yoke 139.

The first retract member 226 is installed in the counterbalance 224 of the latch lever 220 using an insertion molding method. The magnetic force of the magnet 137 is applied to the first retract member 226 that is formed of the magnetic material. The magnetic force can be divided as a component force in the horizontal direction that rotates the first retract member 226 in the horizontal direction (X-axis direction), and a component force in the vertical direction (F) that moves the retract member 226 in the vertical direction (Z-axis direction). As described above, the component force in the horizontal direction of the magnetic force applies the torque to the latch lever 220 for rotating in the clockwise direction.

FIG. 6 is a graph illustrating changes of the component force in the vertical direction of the magnetic force that is applied to the first retract member 226 according to changes of a height (h) from the upper surface of the lower yoke 138 to a center of the first retract member 226. The graph of FIG. 6 is an example of an 0.85 inch HDD, and following numerical values are also based on an 0.85 inch HDD. Therefore, following numerical values can be changed appropriately according to the size of the HDD.

In the graph of FIG. 6, when the height h of the first retract member 226 is small, that is, when the first retract member 226 is close to the lower yoke 138, the component force in the vertical direction F is applied to the first retract member 226 in an upward direction. When the height h of the first retract member 226 is large, that is, when the first retract member 226 is close to the upper yoke 139, the component force in the vertical direction F of the magnetic force is applied to the first retract member 226 in a downward direction. In addition, when the height h of the first retract member 226 is about 1.2mm, the component force in the vertical direction F of the magnetic force applied to the first retract member 226 is substantially 0 or can be minimized.

Therefore, as shown in FIG. 5, if the first retract member 226 is installed at the height, where the component force of the vertical direction F becomes 0 or can be minimized, that is, at the height of 1.2mm from the upper surface of the lower yoke 138, the first retract member 226 and the latch lever 220 do not move upward or downward, but remain at the same position. In addition, a first gap g1 is formed between the bottom surface of the latch lever 220 and an upper surface of a flange 222a of the pivot shaft 222 and a second gap g2 is formed between the upper surface of the latch lever 220 and the bottom surface of the upper yoke 139, and then, the latch lever 220 can maintain this lifting state without contacting the upper surface of the flange 222a and the bottom surface of the upper yoke 139.

Meanwhile, a gravitational force W is applied toward the lower yoke 138 by the weight of the first retract member 226 and the latch lever 220. In an 0.85 inch HDD, the gravitational force W is about 2.5E-4 N, which is smaller than the component force of the vertical direction F of the magnetic force applied to the first retract member 226. According to the graph of FIG. 6, the gravitational force W of about 2.5E-4 N corresponds to the low height of about 0.1mm. Moreover, when the magnet 137 having a larger magnetic force is used, the component force of the vertical direction F increases, and thus, the gravitational force W can be ignored.

In addition, the effect of the gravitational force W can be covered by the first gap g1 and the second gap g2. That is, the first gap g1 and the second gap g2 are larger than a height change due to the gravitational force W, and thus, even if the height of the first retract member 226 is changed by the gravitational force W, the latch lever 220 does not contact the flange 222a of the pivot shaft 222 or the upper yoke 139.

The second gap g2 between the upper surface of the latch lever 220 and the bottom surface of the upper yoke 139 is maintained to be greater than a height change due to the gravitational force W being applied in an opposite direction because the HDD installed in a mobile electronic device is used while upside-down.

Referring to FIG. 5, when the height h where the vertical component force F of the magnetic force applied to the first retract member 226 becomes 0 is 1.2mm and a difference (a) between heights of the upper surface of the lower yoke 138 and the upper surface of the flange 222a of the pivot shaft 222 is 0.2mm, and if the first gap g1 between the bottom surface of the latch lever 220 and the upper surface of the flange 222a of the pivot shaft 222 is set as 0.1 mm, a height difference (b) between the bottom surface of the latch lever 220 and the center of the first retract member 226 is 0.9mm. That is, if the first retract member 226 is installed so as to be separated 0.9mm from the bottom surface of the latch lever 220, the latch lever 220 can maintain the lifting state from the flange 222a of the pivot shaft 222.

The first gap g1 between the bottom surface of the latch lever 220 and the upper surface of the flange 222a of the pivot shaft 222 is set to be 0.1mm because the height changed by the gravitational force W is about 0.1mm. That is, each of the first gap g1 and the second gap g2 is larger than 0.1mm, however, they may be 0.05mm ~ 0.2mm larger than the height in order to leave a margin. Therefore, in this case, the first gap g1 and the second gap g2 can each be set to be 0.15mm ~ 0.3mm.

As described above, since the latch lever 220 is lifted by the magnetic force, the latch lever 220 does not contact the flange 222a of the pivot shaft 222 and the upper yoke 139. Accordingly, the latch lever 220 can be rapidly and constantly rotated without being affected by frictional force, and thus, the lock-releasing operation of the latch lever 220 can be performed precisely and reliably when the actuator 130 rotates for operating the HDD.

Referring to FIGS. 3 and 4, a second retract member 230 can be installed on the rear end portion of the swing arm 132. The second retract member 230 can be disposed on the notch 210 of the swing arm 132. The second retract member 230 can be formed of a magnetic material, for example, steel that is a ferromagnetic material, so that the magnetic force of the magnet 137 can be applied to the second retract member 230. The second retract member 230 applies a torque for rotating in the clockwise direction to the swing arm 132. In more detail, since the magnetic force of the magnet 137 is applied to the second retract member 230, the torque for rotating in the clockwise direction is always applied to the swing arm 132 by the magnetic force. As described above, the torque in the clockwise direction applied to the swing arm 132 prevents the swing arm 132 from rotating in the counter-clockwise direction due to weak shocks and vibrations, and thus, the state of the swing arm 132 in the head parking position can be maintained.

In addition, the torque in the clockwise direction applied to the swing arm 132 by the second retract member 230 may be greater than the torque in the clockwise direction applied to the latch lever 220 by the first retract member 226. Therefore, the swing arm 132 is not rotated in the counter-clockwise direction by the torque in the clockwise direction applied to the latch lever 220, in a state where the swing arm 132 stops at the parking position.

When the HDD stops operating and the head mounted on the slider 134 is parked on the ramp 140, the swing arm 132 is rotated in the clockwise direction by the VCM. Here, the side surface of the notch 210 formed on the rear end portion of the swing arm 132 contacts the stopper 225 that is disposed on the latch lever 220, and then, the latch lever 220 is rotated in the counter-clockwise direction by being pushed by the swing arm 132 that rotates in the clockwise direction.

When the head reaches the parking position on the ramp 140, the rotational driving force applied to the swing arm 132 by the VCM is removed, and thus, the rotation of the swing arm 132 in the clockwise direction is stopped. At this time, the parking state of the actuator 130 is maintained by the torque in the clockwise direction that is applied to the swing arm 132 by the magnetic force between the second retract member 230 and the magnet 137. In addition, as described above, since the torque that is greater than the torque applied to the latch lever 220 is applied to the swing arm 132, the parking state of the actuator 130 can be maintained stably.

Hereinafter, operations of the actuator latch system according to the current embodiment will be described.

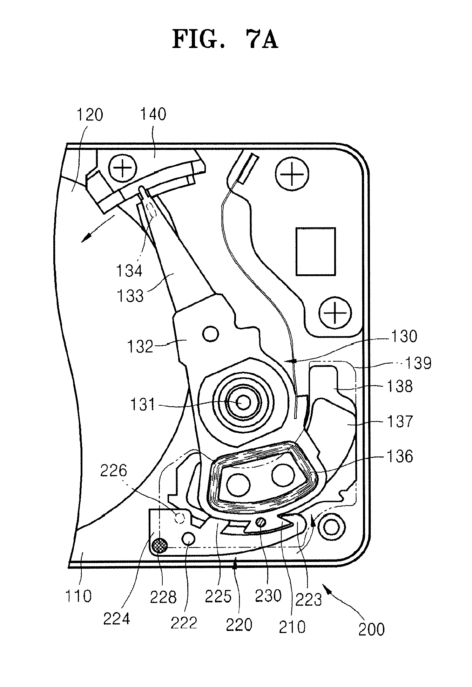

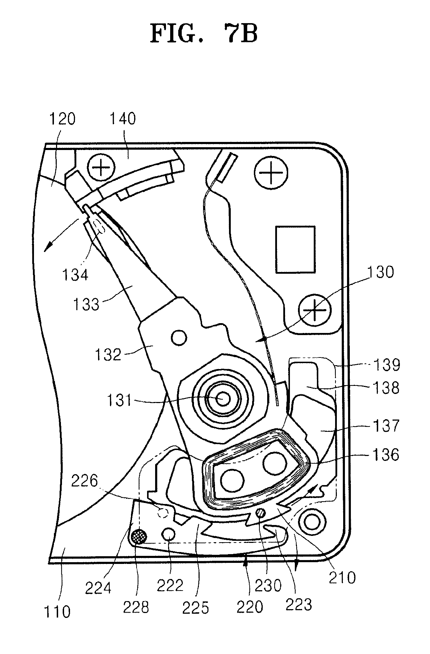

FIGS. 7A and 7B are views illustrating a locked state and a lock-released state of the actuator latch system according to the current embodiment of the present invention.

Referring to FIG. 7A, when a rotational shock in a clockwise direction is applied to the HDD when the magnetic head is parked on the ramp 140, the swing arm 132 and the latch lever 220 are rotated in the counter-clockwise direction by the inertia. Accordingly, the notch 210 disposed on the rear end portion of the swing arm 132 is engaged by the hook 223 of the latch lever 220, and thus, further rotation of the swing arm 132 in the counter-clockwise direction is restricted.

On the other hand, when a rotational shock in a counter-clockwise direction is applied to the HDD, the swing arm 132 and the latch lever 220 are rotated in the clockwise direction by inertia. Accordingly, the notch 210 of the swing arm 132 and the stopper 225 of the latch lever 220 collide with each other. Due to the above collision, the swing arm 132 and the latch lever 220 both rebound in the counter-clockwise direction. Therefore, as described above, the notch 210 of the swing arm 132 is engaged by the hook 223 of the latch lever 220, and thus, the swing arm 132 cannot rotate further.

Next, referring to FIG. 7B, when the HDD is turned on, as described above, the rotational force in the counter-clockwise direction is applied to the swing arm 132 by the interaction between the VCM coil 136 on the rear end portion of the swing arm 132 and the magnet 137. Therefore, the swing arm 132 overcomes the torque in the clockwise direction that is applied by the magnet 137 and the second retract member 230 to rotate in the counter-clockwise direction. At the same time, the latch lever 220 is in an opened state due to rotating in the clockwise direction by the torque in the clockwise direction applied by the first retract member 220 and the magnet 137, and thus, the notch 210 of the swing arm 132 that rotates in the counter-clockwise direction is not engaged by the hook 223 of the latch lever 220. As described above, since the latch lever 220 is lifted by the magnetic force, the rotational speed of the latch lever 220 is fast and reliable, and thus, the lock-releasing operation can be performed precisely and reliably.

As described above, in the actuator latch system for an HDD according to the present invention, the latch lever is lifted using the magnetic levitation mechanism so as not to contact the flange of the pivot shaft and the upper yoke. Accordingly, the latch lever can rotate rapidly and reliably, and the operational accuracy and reliability of the actuator are improved when the actuator rotates during operation of the HDD.

While the present invention has been particularly shown and described with reference to exemplary embodiments thereof, it will be understood by those of ordinary skill in the art that various changes in form and details may be made therein without departing from the spirit and scope of the present invention as defined by the following claims. For example, the actuator latch system of the present invention is applied to a ramp loading type HDD, however, it can be applied to a CSS type HDD.

## Claims

1. An actuator latch system for a hard disk drive (HDD) for locking an actuator, which includes a swing arm rotatably installed on a base member, a voice coil motor (VCM) coil coupled to an end portion of the swing arm, a lower yoke and an upper yoke disposed below and above the VCM coil, and a magnet attached onto at least one of the lower yoke and the upper yoke, in a head parking position, the actuator latch system comprising:
a notch formed on an end portion of the swing arm;
a latch lever rotatably coupled to a pivot shaft that is fixed on the base member, and including a hook which can be engaged by the notch formed to an end of the latch lever and a counterbalance formed to the other end of the latch lever; and
a first retract member installed on the counterbalance of the latch lever to apply a torque to the latch lever in a direction using the magnetic force between the first retract member and the magnet;
wherein the first retract member is formed at a height where a vertical component force of the magnetic force applied to the first retract member from the magnet is 0 or is minimized, and a first gap and a second gap are respectively formed below and above the latch lever.

2. The actuator latch system of claim 1, wherein the first gap is formed between a bottom surface of the latch lever and an upper surface of a flange formed on the pivot shaft, and the second gap is formed between an upper surface of the latch lever and a bottom surface of the upper yoke.

3. The actuator latch system of claim 1, wherein each of the first gap and the second gap is greater than a potential height change of the first retract member caused by the weights of the latch lever and the first retract member.

4. The actuator latch system of claim 3, wherein each of the first gap and the second gap is 0.05mm ~ 0.2mm greater than the potential height change of the first retract member.

5. The actuator latch system of claim 1, wherein the first retract member is installed in the counterbalance using an insertion molding method.

6. The actuator latch system of claim 1, wherein a stopper is formed on the latch lever so as to contact the notch in order to restrict the rotation of the swing arm when the swing arm rotates toward the head parking position.

7. The actuator latch system of claim 6, wherein the stopper protrudes from a portion of the latch lever, which is adjacent to the pivot shaft.

8. The actuator latch system of claim 1, wherein a weight is installed on the counterbalance of the latch lever in order to control an inertial force of the latch lever.

9. The actuator latch system of claim 1, wherein a second retract member is disposed on an end portion of the swing arm so as to apply a torque to the swing arm in a direction using the magnetic force between the second retract member and the magnet.

10. The actuator latch system of claim 9, wherein the torque applied to the swing arm by the second retract member is greater than the torque applied to the latch lever by the first retract member.
